# NEW EUROPEAN PATENT SPECIFICATION

(11) **EP 0 216 931 B2**
(45) Date of publication and mention of the opposition decision: **18.12.1996**
(45) Mention of the grant of the patent: 21.02.1990
(21) Application number: 86901506.5
(22) Date of filing: 25.02.1986
(51) Int. Cl.: G06T 3/60

(54) **IMAGE ROTATING SYSTEM HAVING AN ARBITRARY ANGLE**
BILDROTATIONSSYSTEM FÜR BELIEBIGEN WINKEL
SYSTEME DE ROTATION D'IMAGES SUR UN ANGLE ARBITRAIRE

(30) Priority: 28.02.1985 JP 39813/85
(43) Date of publication of application: 08.04.1987
(73) Proprietor: MITSUBISHI DENKI KABUSHIKI KAISHA, Tokyo 100 (JP)
(72) Inventor: TANAKA, Arsushi Mitsubishi Denki Kabushiki Kaisha, Kamakura-shi Kanagawa 247 (JP); KAMEYAMA, Masatoshi Mitsubishi Denki Kabushiki, Kamakura-shi Kanagawa 247 (JP)
(74) Representative: Hoffmann, Klaus, Dr. rer. nat.
(86) International application number: PCT/JP86/00090
(87) International publication number: WO 86/05299

(56) References cited:
- DE-A- 3 419 063
- "Architecture and Data Processing Alternatives for the Tse Computer; Vol. 4: Image Rotation Using Tse Operations", by M.H. Kao and R.E. Bodenheimer; Final Report. Contract NSG-5002; Technical Report TR-EE/CS-76-4, October 1976; NASA Goddard Space Flight Center; (available from the U.S. Library of Congress)
- "A Number Theoretic Transform Approach to Image Rotation in Parallel Array Processors", by T.A. Kriz and D.F. Bachman; ICASSP 80 Proceedings; IEEE Int. Conf. on Acoustics, Speech and Signal Processing, April 9-11, 1980, p. 430-433

## Description

This invention relates to a system for rotating an image by an arbitrary angle for use in image processing techniques.

Heretofore, a system has usually resorted to affine transformation when attempting to rotate two-dimensional image data Rotating an image through affine transformation requires arithmetic operations based on the following equation (1); 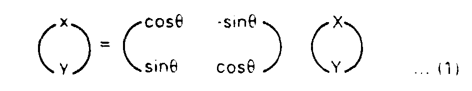 where X, Y are coordinates of the original pixel, x, y are coordinates after transformation, and θ is a rotated angle of image data. When handling image data such as a displayed image, the above transformation has to implement arithmetic operations on equation (1) pixel-by-pixel. Thus, a large amount of computation is needed, particularly when rotating an image of large area, and therefore it was considered very difficult to obtain a rotated image at nigh speed.

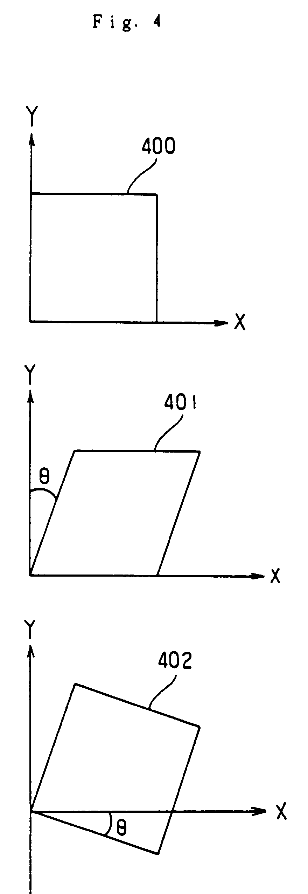

Accordingly, as disclosed in Japanese Patent Laid-Open No. 55-94145 (1980) by way of example, there has been proposed a system where an image is skewed to obtain a rotated image in a pseudo manner, that is, an image is subjected first to a skew transformation by an angle θ in a horizontal direction and then to another skew transformation by an angle θ in a vertical direction. Such a system resorting to skew transformation by an angle θ will be described with reference to Fig. 4. In Fig. 4 there is designated at 400 an original image, at 401 an image resulting from skew transformation in an horizontal direction, and at 402 an image resulting from 401 (which itself resulted from the original image after the skew transformation in a horizontal direction) after another skew transformation in a vertica! direction. These skew transformations can be achieved at high speed by a suitable method such as skew scan.

The skew transformation method can be described by the following equation (2): 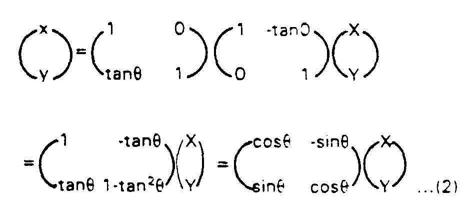 where θ is a very small angle.

Because the conventional image rotating system by an arbitrary angle was implemented as mentioned above, approximation of equation (2) will lose its effectiveness and the rotated image will be distorted, as a rotation angle θ increases. As a result, there is also a problem that the conventional system can be applied only while the rotation angle is within a range of certain very small angles.

But there is the problem that the transformed image is distorted. Said transformation matrix depends on approximation.

Some rotation algorithms that do not depend on approximation are known from DE 3 419 063 A1. These algorithms include an image scaling method. For example, this kind of transformation can be described as

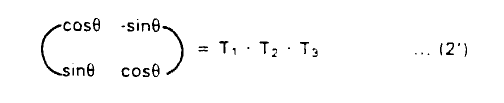

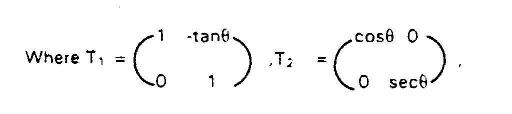

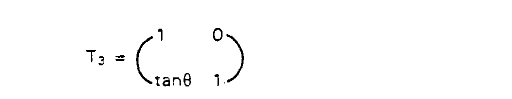

Matrix T₁ is the skew transformation in the horizontal direction. Matrix T₂ is the scaling with scale factors of cosθ and secθ for the horizontal and vertical directions, respectively. Matrix T₃ is the skew transformation in the vertical direction. As digital image scaling is typically realized by a transformation of pixel density per area, it is impossible to avoid an inferior image quality.

From "Architecture and Data Processing Alternatives for the Tse Computer; Vol. 4: Image Rotation Using Tse Operations", by M.H. Kao and R.E. Bodenheimer; Final Report. Contract NSG-5002; Technical Report TR-EE/CS-76-4, October 1976, NASA Goddard Space Flight Center, an algorithm for rotating digital images by a desired angle θ is known which comprises 3 steps: a) performing a vertical skew transformation (in Y-direction), b) performing a horizontal skew transformation (in X-direction) on the data which were skew transformed in the first step, c) performing another skew transformation (in Y-direction) on the data obtained from the horizontal skew transformation, the parameters of this skew transformation being obtained by tracing back the original pixel positions of so-called reference pixels located on the diagonal of the image, such that from this operation the amount of sliding for each column of the image can be calculated.

In order to use the computational advantages of sliding complete rows and complete columns of the image separately and sequentially, this document discloses partitioning these equations in such a manner that according to step (a) above, at first a vertical slide of each complete column is performed, the amount of sliding being determined from the original column position and that secondly horizontal slides for each row are performed, the amount of sliding for each row being determined from the original vertical row position of that column of pixels which is the only one that has not been slided in step (a).

The algorithm according to this document always requires the original coordinates of a pixel in order to obtain the shift values. In order to retrieve the original position of at least one pixel for each column of the image obtained from step (b), sophisticated algorithm is suggested only for this purpose, which requires considerable computational effort.

This invention, which is stated in claim 1, is to provided a system for rotating an image by an arbitrary angle which enables the production of a precisely rotated image at high speed without resorting to approximation of an arithmetic equation, the system being characterized in that a skew transformation is implemented three times alternately for respective skew angles in horizontal and vertical directions corresponding to a desired rotation angle, so that affine transformation of an image requiring a large amount of computation may be replaced by triple skew transformations, thereby rotating any two-dimensional image data by a desired angle.

In accordance with the invention, since skew transformation is implemented for respective skew angles in X- and Y-directions corresponding to a desired rotation angle three times alternately, image rotation can be performed at high speed, without needing arithmetic operations of affine transformation. The invention also has the effect that two-dimensional image data rotated by an arbitrary angle is obtainable more precisely than in a conventional system which resorts to double skew transformations.
Fig. 1 is a diagram showing the procedure of skew transformations according to one embodiment of the invention;
Fig. 2 is an illustration showing a two-dimensional image according to one embodiment of skew transformation in an X-direction;
Fig. 3 is a diagram showing the process of image rotation according to one embodiment of the invention; and
Fig. 4 is a diagram for explaining a conventional image rotating system having an arbitrary angle.

Hereinafter, one embodiment of the invention will be described with reference to the drawings.

It is to be noted that the description will be given for X-Y rectangular coordinates with the X-direction representing a horizontal direction and the Y-direction representing a vertical direction.

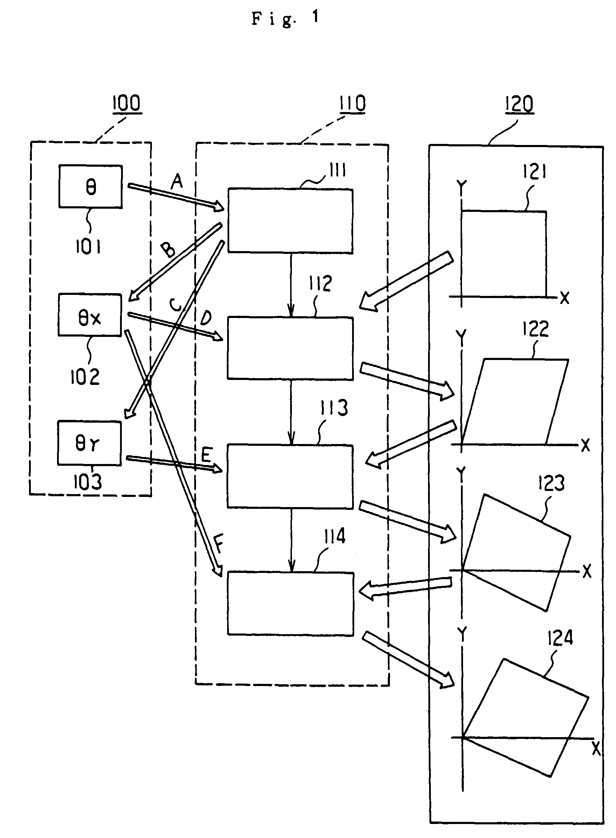

Referring to Fig. 1 there is shown one embodiment of the invention, in which 100 is a data unit, 110 is a processing unit composed of four processing blocks, and 120 is an image memory (hereinafter abbreviated to as 1MM) for storing two-dimensional image data. Furthermore, 101 is a rotation angle 8 of the two-dimensional image data, 102 is a skew angle θₓ of the two-dimensional image data in the X-direction, 103 is a skew angle θ_{y} of the two-dimensional image data in the Y-direction, 111 is a transformation angle determining section, 112 is a (first) X-axis skew transformation section, 113 is a Y-axis skew transformation section, 114 is a (second) X-axis skew transformation section, 121 is a (first) original two-dimensional image data, 122 and 123 are (second and third) two-dimensional data gained during the process of image rotation, and 124 is (fourth) two-dimensional image data gained after image rotation.

Operation of the system will now be described.

First, when the image rotation angle θ 101 is given as indicated by arrow A, the skew angle θ_{X} 102 in the X-direction and the skew angle θ_{Y} in the Y-direction are both determined in the transformation angle determining section 111 as indicated by arrows B and C, respectively. Then, the X-axis skew transformation section 112 subjects the first two-dimensional image data 121, which is loaded in the IMM 120 as the original two-dimensional image data, to skew transformation in the X-direction for the given transformation angle θ_{X} 102 as indicated by arrow D, thereby producing the second two-dimensional image data 122 which is again written into the IMM 120. Subsequently, the Y-axis skew transformation section 113 subjects the second two-dimensional image data 122 to skew transformation in the Y-direction for the given transformation angle θ_{Y} as indicated by arrow e, thereby producing the third two-dimensional image data 123. After that, the X-axis skew transformation section 114 subjects the third two-dimensional image data 123 to skew transformation in the X-direction for the given transformation angle θ_{X} 102 as indicated by arrow F, thereby finally producing the two-dimensional image data 124 which was obtained by rotating the original two-dimensional data through the angle θ.

There will now be described one embodiment of a method by which the transformation angle determining section 111 shown in Fig. 1 determines the skew angles of skew transformations in the X- and Y-directions corresponding to the given rotation angle. In accordance with the present system, skew transformations for the respective coordinate axes are implemented in the directions of X-, Y- and X-axis. As stated in connection with equation (1), a transformation matrix adapted to implement the rotation processing is represented by:

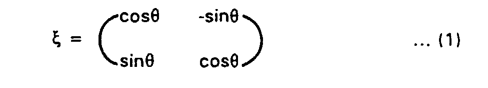

This transformation matrix can be divided into the following three matrices.${\text{Assuming ξ = ξ}}_{\text{1}} {\text{· ξ}}_{\text{2}} {\text{· ξ}}_{\text{3}}$ 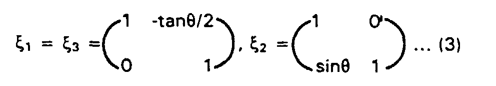 where ξ₁, ξ₃ represent skew transformations in the X-direction, and ξ₂ represents skew transformation in the Y-direction. Accordingly, the transformation angle θ_{X} in the X-direction and the transformation angle θ_{Y} in the Y-direction which are both necessary for rotating the two-dimensional image by an angle 8 are given by the equations (4) below:

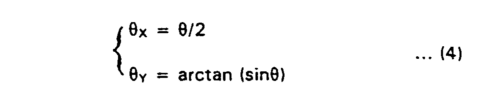

It is thus possible to obtain a rotated image by implementing skew transformations in the directions of X-, Y- and X-axis in this order for the above respective angles.

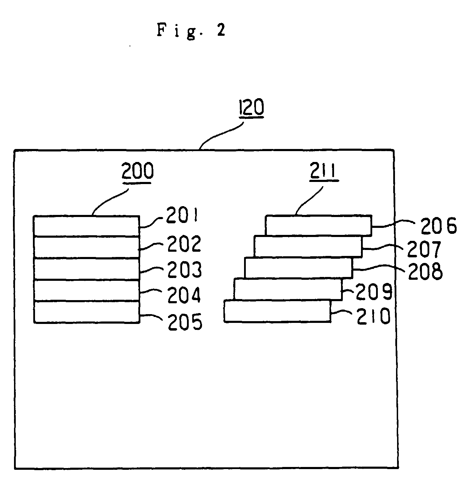

There will now be described one embodiment of skew transformation in the X-direction, with reference to Fig. 2, which is to be implemented by the X-axis skew transformation section 112 shown in Fig. 1. In Fig. 2, 200 is an original two-dimensional image data stored in the IMM 120, 201-205 are two-dimensional image data resulting from dividing the original two-dimensional image data 200 into a plurality of blocks, 206-210 are two-dimensional image data resulting from transferring the divided two-dimensional image data 201-205, respectively, and 211 is a two-dimensional image data resulting after transformation, which image data consists of the transferred two-dimensional image data 206-210.

First, the original two-dimensional image data 200 is divided into plural blocks of the two-dimensional image data 201-205, each block including several rows in accordance with the angle of skew transformation. Practically, when the transformation angle is assumed to be θ_{X}, the number of rows included in each block is given by 1/tanθ_{X}. After that, the divided two-dimensional image data are transferred sequentially. The block of two-dimensional image data 201 is first transferred to a position of the block of two-dimensional image data 206 corresponding to another area within the IMM 129. The block of two-dimensional image data 202 is then transferred to a position of the block of two-dimensional image data 207 which is shifted from the block 206 by one dot. In this respect, when the image data in the IMM 120 is accessed on a word-by-word basis, then bit shift, masking or any appropriate operation is made during transfer of the image data, to thereby shift the transferred data by one dot from one another. The above process is repeated until the block of two-dimensional image data 205, for each of the divided blocks, so that those blocks of two-dimensional image data are transferred to their respective positions shifted from one another by one dot. Skew transformation is thus implemented throughout the original two-dimensional image data 200, resulting in a two-dimensional image data whose entire image has been skewed as represented by the two-dimensional image data 211.

Skew transformation in the X-direction to be implemented by the X-axis skew transformation section 114 shown in Fig. 1 can be achieved in the same manner as above.

Further, skew transformation in the Y-direction to be implemented by the Y-axis skew transformation section 113 can be achieved by applying the above process to the vertical direction, so the description thereof will be omitted.

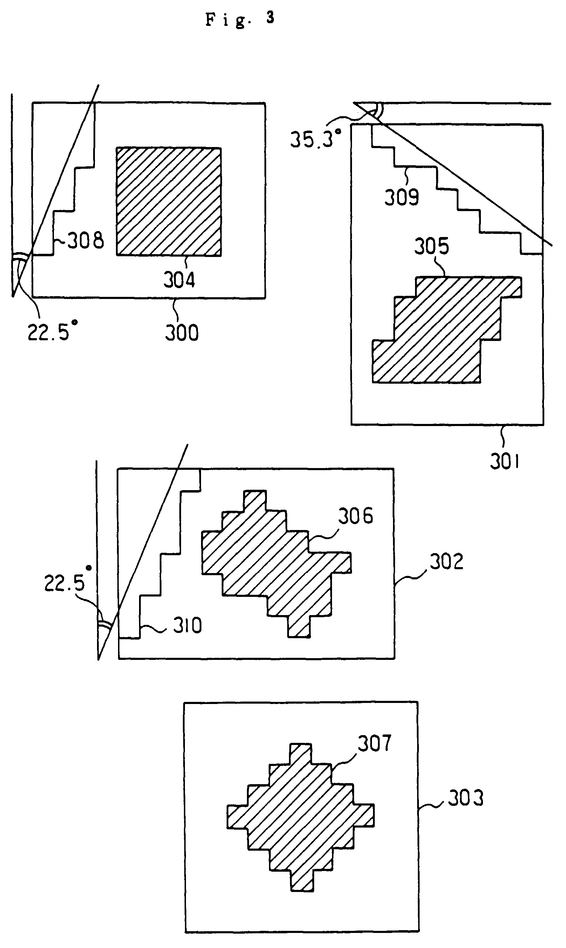

Next, Fig. 3 illustrates the transformation process of practical rotation of two-dimensional image data, according to the invention, for a rotation angle of 45° by way of example. The number of picture elements is assumed to be 5 × 5 pixels for convenience of description. In the figure, 300 is a first image storage area within the IMM 1 20, 301 is a second image storage area within the IMM 120, 302 is a third image storage area within the IMM 120, 303 is a fourth image storage area within the IMM 120, 304 is an original two-dimensional image data, 305 and 306 are two-dimensional image data gained during the process of rotation, 307 is a two-dimensional image data gained after rotation, and 308-310 are digital skew angles each of which indicates in a digital fashion a gradient corresponding to the transformation angle of skew transformation.

Operation of such skew transformation will now be described. First, the skew angles in the X- and Y-directions are determined to be 22.5° and 35.3° from the rotation angle of 45°, respectively, based on the equations (4). First skew transformation in the X-direction for 22.5° is implemented in accordance with the method described in connection with Fig. 2. specifically, the image data is shifted one dot by one dot in a stepwise manner as indicated by the digital skew angle 308 in Fig. 3. The original two-dimensional image data 304 is thus transformed to the two-dimensional image data skewed at the skew angle of 22.5°. After that, the two-dimensional image data 305 is shifted during the process of rotation one dot by one dot in the vertical direction in a stepwise manner as indicated by the digital skew angle 309, so that Y-axis skew transformation is implemented for the skew angle of 35.3° to obtain the two-dimensional image data 306 during the process of rotation. Subsequently, using a similar operation, the above two-dimensional image data 306 is subjected to skew transformation in the X-direction for 22.5°, thereby obtaining the objective two-dimensional image data 307 which resulted from rotating the original two-dimensional image data 304 by 45°.

This invention is applicable not only to a workstation for use in offices, etc., but also to terminal equipment of office automation systems, such as personal computers.

## Claims

1. A system for rotating an image by an arbitrary angle comprising; an image memory for storing two-dimensional image data (121); a transformation angle determining section (111) for determining both a skew angle (θ_{X}) in a horizontal direction and a skew angle (θ_{Y}) in a vertical direction of the original two-dimensional image data stored in said image memory, based on a desired rotation angle (θ); a first X-axis skew transformation section (112) for obtaining second two-dimensional image data (122) which results from skewing first two-dimensional image data stored in said image memory as the original two-dimensional image data in a horizontal direction by the angle as determined by said transformation angle determining section; a Y-axis skew transformation section (113) for obtaining third two-dimensional image data (123) which results from skewing said second two-dimensional image data in a vertical direction by the angle as determined by said transformation angle determining section; and a second X-axis skew transformation section (114) for obtaining fourth two-dimensional image data (124) which results from skewing said third two-dimensional image data in a horizontal direction once again by the angle as determined by said transformation angle determining section (111):
- wherein the skew transformation for implementing the rotation processing is performed with skew transformation matrices represented by the following equations without needing arithmetic operations of affine transformation: 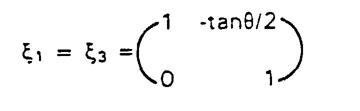 and 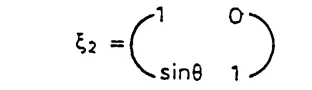
- where ξ₁, ξ₃ represent the first and second skew transformation in the X-direction and where ξ₂ represents the skew transformation in the Y-direction and
wherein the rotation angle (θ) is determined from the equations:${\text{θ}}_{\text{X}} \text{= θ/2}$ and${\text{θ}}_{\text{Y}} \text{= arctan (sinθ).}$

## Patentansprüche

1. Ein System zum Drehen eines Bildes um einen beliebigen Winkel, umfassend:
- einen Bildspeicher zum Speichern von zweidimensionalen Bilddaten (121);
- einen Transformationswinkel-Bestimmungsabschnitt (111) zum Bestimmen sowohl eines Schrägstellungs-Winkels (θₓ) in einer horizontalen Richtung als auch eines Schrägstellungs-Winkels (θ_{y}) in einer vertikalen Richtung der ursprünglichen zweidimensionalen Bilddaten, die in dem Bildspeicher gespeichert sind, auf Grundlage eines gewünschten Drehwinkels (θ );
- einen ersten Schrägstellungs-Transformationsabschnitt (112) für die X-Achse zum Ermitteln von zweiten zweidimensionalen Bilddaten (122), die sich aus einer Schrägstellung der ersten zweidimensionalen Bilddaten, die in dem Bildspeicher als die ursprünglichen zweidimensionalen Bilddaten gespeichert sind, in einer horizontalen Richtung um den Winkel, der von dem Transformationswinkel-Bestimmungsabschnitt bestimmt wird, ergeben;
- einen Schrägstellungs-Transformationsabschnitt (113) für die Y-Achse zum Ermitteln von dritten zweidimensionalen Bilddaten (123), die sich aus einer Schrägstellung der zweiten zweidimensionalen Bilddaten in einer vertikalen Richtung um den Winkel, der von dem Transformationswinkel-Bestimmungsabschnitt bestimmt wird, ergeben; und
- einen zweiten Schrägstellungs-Transformationsabschnitt (114) für die X-Achse zum Ermitteln von vierten zweidimensionalen Bilddaten (124), die sich aus einer nochmaligen Schrägstellung der dritten zweidimensionalen Bilddaten in einer horizontalen Richtung um den Winkel, der von dem Transformationswinkel-Bestimmungsabschnitt (111) bestimmt wird, ergeben:
- wobei die Schrägstellungs-Transformation zum Implementieren der Drehungsverarbeitung mit Schrägstellungs-Transformationsmatrizen, die durch die folgenden Gleichungen dargestellt sind, durchgeführt wird, ohne arithmetische Operationen einer affinen Transformation zu benötigen: 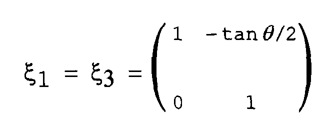 und 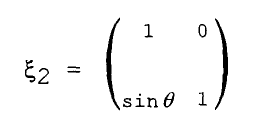
- wobei ξ₁, ξ₃ die erste und zweite Schrägstellungs-Transformation in der X-Richtung bezeichnen, und wobei ξ₂ die Schrägstellungs-Transformation in der Y-Richtung darstellt; und
- wobei der Drehwinkel θ aus den folgenden Gleichungen bestimmt wird:${\text{θ}}_{\text{x}} \text{= θ/2}$ und${\text{θ}}_{\text{y}} \text{= arctan (sinθ).}$

## Revendications

1. Système pour la rotation d'une image suivant un angle arbitraire comprenant : une mémoire d'image pour mémoriser une donnée d'image à deux dimensions (121), une section de détermination d'angle de transformation (111) pour déterminer à la fois un angle d'inclinaison (θ_{X}) dans une direction horizontale et un angle d'inclinaison (θ_{Y}) dans une direction verticale de la donnée d'image à deux dimensions d'origine mémorisée dans la mémoire d'image, sur la base d'un angle de rotation désiré (θ), une première section de transformation d'inclinaison de l'axe X (112) pour obtenir une seconde donnée d'image à deux dimensions (122) qui est obtenue à partir de l'inclinaison d'une première donnée d'image à deux dimensions mémorisée dans la mémoire d'image sous la forme de la donnée d'image à deux dimensions d'origine dans une direction horizontale suivant l'angle tel que déterminé par la section de détermination d'angle de transformation, une section de transformation d'inclinaison de l'axe Y (113) pour obtenir une troisième donnée d'image à deux dimensions (123) qui est obtenue à partir de l'inclinaison de la seconde donnée d'image à deux dimensions dans une direction verticale suivant l'angle tel que déterminé par la section de détermination d'angle de transformation, et une seconde section de transformation d'inclinaison d'axe X (114) pour obtenir une quatrième donnée d'image a deux dimensions (124) qui est obtenue à partir de l'inclinaison de la troisième donnée d'image à deux dimensions dans une direction horizontale une fois encore suivant l'angle tel que déterminé par la section de détermination d'angle de transformation (111) :
- dans lequel la transformation d'inclinaison pour la mise en oeuvre du traitement de rotation est effectuée à l'aide de matrices de transformation d'inclinaison représentées par les équations suivantes sans nécessiter une opération arithmétique d'une transformation affine : 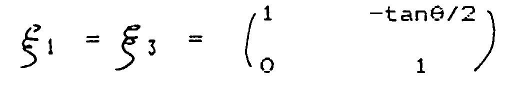 et 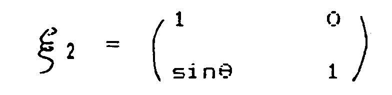 ou ξ₁, ξ₃ représentent la première et la seconde transformation d'inclinaison dans la direction X et où ξ₂ représente la transformation d'inclinaison dans la direction Y et
dans lequel l'angle de rotation (θ) est déterminé à partir des équations :${\text{θ}}_{\text{X}} \text{= θ/2}$ et${\text{θ}}_{\text{Y}} \text{= arctan (sinθ).}$
